Europäisches Patentamt

European Patent Office

Office européen des brevets

(11) Veröffentlichungsnummer : **0 041 197**
**B1**

(19)

(12) **EUROPÄISCHE PATENTSCHRIFT**

(45) Veröffentlichungstag der Patentschrift :
21.11.85

(51) Int. Cl.⁴ : **G 10 K 11/16, B 60 B 17/00,**
**F 16 F 15/32**

(21) Anmeldenummer : 81103941.1

(22) Anmeldetag : 22.05.81

(54) **Schallschirm mit Resonatoren am Schirmrand.**

(30) Priorität : 02.06.80 DE 3020849

(43) Veröffentlichungstag der Anmeldung :
09.12.81 Patentblatt 81/49

(45) Bekanntmachung des Hinweises auf die Patenterteilung : 21.11.85 Patentblatt 85/47

(84) Benannte Vertragsstaaten :
FR GB IT

(56) Entgegenhaltungen :
EP-A- 0 020 284
EP-A- 0 029 120
DE-A- 2 835 168
DE-B- 2 834 823
REVUE GALE DES CHEMINS DE FER, Band 99, Nr. 5,
Mai 1980, PARIS (FR) E. RAQUET "Roues acoustiquement amorties pour trafic ferroviaire à grande distance", Seiten 317/318
ACUSTICA, Band 15, Nr. 3, 1965, (DE) U. KURZE
"Untersuchungen an Kammerdämpfern", Seiten 139-
150
POLYTECHNISCH TIJDSCHRIFT GELUID & TRIL-
LING, Band 35, Nr. 2, April 1980 DEN HAAG (NL) H.
ALBRECHT "Trillingabsorberende wielschermen",
Seiten 49-52

(73) Patentinhaber : **Messerschmitt-Bölkow-Blohm Gesell-**
**schaft mit beschränkter Haftung**
**Robert-Koch-Strasse**
**D-8012 Ottobrunn (DE)**

(72) Erfinder : **Bschorr, Oskar, Dr. Dipl.-Ing.**
**Keplerstrasse 11**
**D-8000 München 80 (DE)**

**Beschreibung**

Gegenstand der Erfindung ist eine Vorrichtung zur passiven, sekundären Verringerung der Schallemission einer Schallquelle bzw. der Schallimmission an einem Immissionsort, mit einem Schallschirm, z. B. zum Abschirmen des Straßenverkehrslärms, von Maschinen und mit mitrotierenden Schallschirmen von autoreifen und Eisenbahnrädern.

Schallschirme haben sich als einfache, praktikable Mittel in der Lärmbekämpfung erwiesen. Sie werden dort eingesetzt, wo primäre Maßnahmen direkt an der Quelle und Vollkapselungen nicht möglich sind. Bekanntermaßen hängt ihre Wirkung von der geometrischen Schirmhöhe ab : Je größer der dem Schallstrahl über die Schirmkante aufgezwungene Umweg, desto größer ist die Lärmreduktion.

Aufgabe der Erfindung ist, über den durch die Geometrie des Schallschirmes gegebenen Schallumweg hinaus einen zusätzlichen Umweg und damit eine zusätzliche Abschirmwirkung zu erreichen.

Diese Aufgabe wird erfindungsgemäß dadurch gelöst, daß zur virtuellen Überhöhung des Schallschirmes an dessen Rand Helmholtz-Resonatoren und/oder Silatoren angeordnet sind. Bekanntlich weisen diese im Bereich ihrer Resonanz einen Impedanzeinbruch auf. Dieses Impedanzgefälle gegenüber dem Umgebungsmedium, z. B. Luft bewirkt eine Schallreflexion, die maximal bis $\lambda/2$ ($\lambda$ = Schallwellenlänge) reichen kann. Dies entspricht einer virtuellen Erhöhung der Schirmkante. Um eine breitbandige Wirkung zu haben, können mehrere auf verschiedene Frequenzen abgestimmte Resonatoren angeordnet werden.

Bei rotierenden Schallschirmen, an PKW-LKW-Reifen, Eisenbahnrädern usw. können Resonatoren verwendet werden, deren Eigenfrequenzen durch die Fliehkraft der ebenfalls drehzahlabhängigen Störfrequenzen angepaßt werden. Dies kann in einfacher Weise dadurch geschehen, daß bei Helmholtz-Resonatoren über die Fliehkraft das Resonatorvolumen elastisch verstellt wird. Bei Silatoren ergibt die Vorbelastung durch die Fliehkraft ebenfalls eine Verstellung des Resonanzpunktes.

Der Erfindungsgegenstand ist anhand von vier Ausführungsbeispielen näher erläutert.

Figur 1   Schallschirm mit Helmholtz-Resonatoren,

Figur 2   Schallschirm mit Silatoren,

Figur 3   Rotierender Schallschirm,

Figur 4   Rotierender Schallschirm.

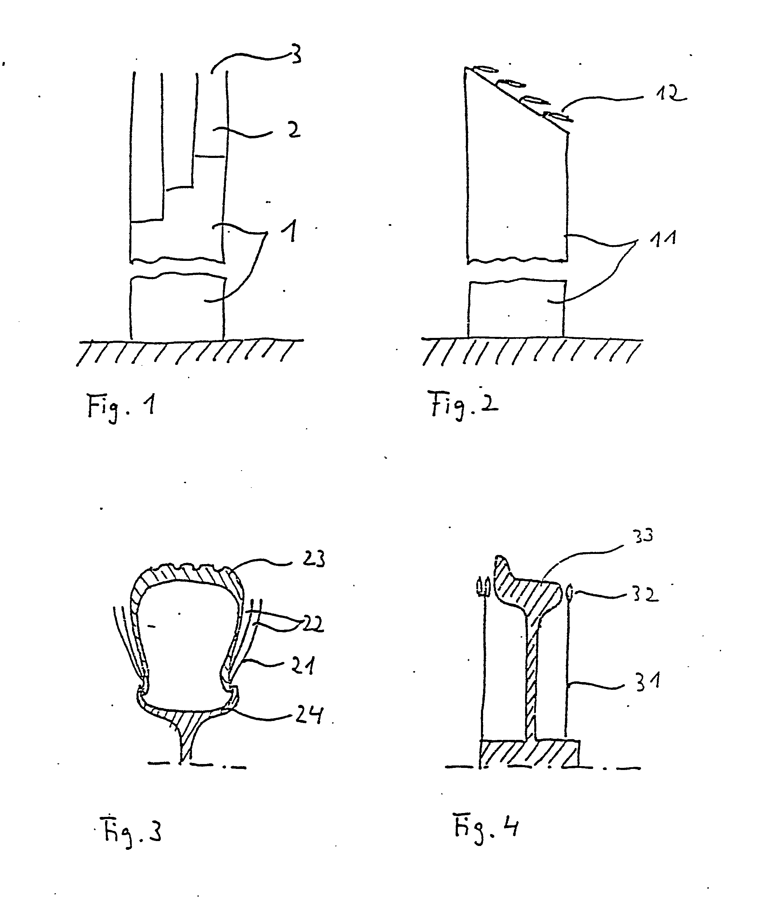

Fig.1 zeigt im Querschnitt einen Schallschirm 1, der am Schirmrand Helmholtz-Resonatoren 2 aufweist. Die Helmholtz-Resonatoren 2 sind Luftvoluminas, die an sich jede beliebige Form haben können. Klassische Ausführungsformen sind flaschenförmig. Wegen der höheren Packungsdichte sind hier zylinderförmige Formen herangezogen. Unterschiedliche Resonanzfrequenzen sind durch verschiedene Zylindertiefen realisiert. Die Eigendämpfung der Helmholtz-Resonatoren 2 kann durch Dämpfungsstoffe und/oder durch engere Querschnitte erhöht werden. Die öffnungen 3 der Helmholtz-Resonatoren münden an der Schirmkante. Dadurch, daß die Dämm- und Reflexionswirkung bis zu $\lambda/2$ von der Resonatoröffnung 3 entfernt reicht, entspricht dies einer zusätzlichen « unsichtbaren » Überhöhung des Schallschirmes 1.

Fig. 2 ist analog zu Figur 1 mit dem Unterschied, daß hier anstelle von Helmholtz-Resonatoren Silatoren 12 an die Schirmkante des Schallschirmes 11 angebracht sind. Hierbei handelt es sich um linsenförmig geformte Blechkapseln, die evakuiert sind und als mechanische Schwinger analog den Helmholtz-Resonatoren nach Fig. 1 wirken. Da sich Silatoren wesentlich kleiner bauen lassen als Helmholtz-Resonatoren gleicher Wirkung, ist es damit auch möglich, sehr tieffrequenten und breitbandigen Luftschall zu beeinflussen.

Fig. 3 und 4 betreffen mitrotierende Schallschirme. In Fig. 3 ist ein kreisringförmiger, am Reifen 23 oder an der Felge 24 befestigter Lärmschirm 21 mit am Außenrand mündenden Helmholtz-Resonatoren 22 dargestellt. Der Schallschirm 21 und die Helmholtz-Resonatoren 22 werden aus einem elastischen Material, z. B. textilfaserverstärktem Gummi gebildet. Wie in Fig. 1 beschrieben, bewirken diese eine zusätzliche Vergrößerung des Schirmradius um bis zu $\lambda/2$. Da aus fahrtechnischen Gründen zwischen Schirmrand und Straße ein Sicherheitsabstand eingehalten werden muß, ist hier eine « unsichtbare » Schirmerweiterung besonders vorteilhaft.

Da Reifenlärm entsprechend der Anregung durch die Profilteilung hochfrequent ist (Frequenzmaximum bei 100 km/h ungefähr 1 000 Hz), läßt sich dieser Anwendungsfall mit Helmholtz-Resonatoren 22 verwirklichen. Da die Störfrequenz geschwindigkeitsabhängig ist, kann durch eine elastische Verstellung des Helmholtz-Volumens über die Fliehkraft jeweils die Resonanzfrequenz automatisch nachgeregelt werden.

Fig. 4 zeigt eine Abschirmung 31 eines Eisenbahnrades 33, wobei als Resonatoren Silatoren 32 eingesetzt sind.

**Patentansprüche**

1. Vorrichtung zur passiven, sekundären Verringerung der Schallemission einer Schallquelle bzw. der Schallimmission an einem Immissionsort, mit einem Schallschirm, dadurch gekennzeichnet, daß zur virtuellen Überhöhung des Schallschirmes (1, 11, 21, 31) an dessen Rand Helmholtz-Resonatoren (2, 22) und/oder Silatoren (12, 32) angeordnet sind.

2. Vorrichtung nach Anspruch 1, dadurch gekennzeichnet, daß zur Abschirmung von breitbandigem Schall auf verschiedene Frequenzen abgestimmte Resonatoren angeordnet sind.

3. Vorrichtung nach Anspruch 1 oder 2, mit einem mit der Schallquelle mitrotierenden Schallschirm, dadurch gekennzeichnet, daß die Helmholtz-Resonatoren bzw. die Silatoren so ausgebildet sind, daß sich durch elastische Volumenänderung der Helmholtz-Resonatoren infolge der Fliehlkraftbelastung bzw. durch die geschwindigkeitsabhängigen Druckänderungen an den Silatoren deren Resonanzfrequenzen jeweils dem drehzahlabhängigen Schallspektrum anpassen.

**Claims**

1. A device having a sound screen for the passive secondary reduction of the emission of sound from a source of sound or, respectively, of the immission of sound at an immission location, characterised in that Helmholtz resonators (2, 22) and/or silators (12, 32) are arranged at the edge of the sound screen (1, 11, 21, 31) for virtual superelevation thereof.

2. A device according to Claim 1, characterised in that resonators tuned to different frequencies are provided for the screening of wide-band sound.

3. A device according to Claim 1 or 2 having a sound screen co-rotating with the source of sound, characterised in that the Helmholtz resonators or, respectively, the silators are so designed that, through elastic changes in volume of the Helmholtz resonators as a result of the centrifugal force loading or, respectively, through the speed-dependent changes in pressure at the silators, the resonance frequencies thereof adapt themselves in each case to the rotational-speed-dependent sound spectrum.

**Revendications**

1. Dispositif de réduction secondaire, passive, de l'émission d'une source de bruit ou de l'immission de bruit en un lieu d'immision, ce dispositif comportant un écran acoustique, caractérisé en ce que, pour provoquer une surélévation virtuelle de l'écran acoustique (1, 11, 21, 31), des résonateurs de Helmoltz (2, 22) et/ou des silateurs (12, 32) sont agencés sur le bord de cet écran.

2. Dispositif selon la revendication 1, caractérisé par des résonateurs accordés sur différentes fréquences, afin d'arrêter les bruits à large bande.

3. Dispositif selon la revendication 1 ou 2, avec un écran acoustique tournant avec la source de bruit, caractérisé en ce que les résonateurs de Helmoltz ou les silateurs sont constitués de façon que leurs fréquences de résonance s'adaptent au spectre sonore, dépendant de la vitesse de rotation, sous l'effet de la variation élastique de volume des résonateurs de Helmoltz sous l'action de la force centrifuge, ou sous l'effet de variations de pression, dépendantes de la vitesse, sur les silateurs.

Fig. 1

Fig. 2

Fig. 3

Fig. 4